# EUROPÄISCHE PATENTSCHRIFT

(11) **EP 2 914 642 B1**
(45) Veröffentlichungstag und Bekanntmachung des Hinweises auf die Patenterteilung: **18.01.2017**
(21) Anmeldenummer: 13783033.7
(22) Anmeldetag: 23.10.2013
(51) Int. Cl.: C08G 18/66, C08G 18/72, C08G 63/181, C08G 64/02, C08G 18/08, C08G 18/12, C08G 18/32, C08G 18/40, C08G 18/42, C08G 18/44, C09J 175/06

(54) **VERWENDUNG VON WÄSSRIGEN POLYURETHANDISPERSIONEN ZUR KASCHIERUNG VON FORMKÖRPERN**
USE OF AQUEOUS POLYURETHANE DISPERSIONS FOR LAMINATING MOLDED ARTICLES
UTILISATION DE DISPERSIONS DE POLYURÉTHANE AQUEUSES POUR REVÊTIR PAR CONTRE-COLLAGE DES CORPS PRÉSENTANT UNE FORME

(30) Priorität: 02.11.2012 US 201261721518 P; 02.11.2012 EP 12191045
(43) Veröffentlichungstag der Anmeldung: 09.09.2015
(73) Patentinhaber: BASF SE, 67056 Ludwigshafen am Rhein (DE)
(72) Erfinder: MEYER, Axel, 69115 Heidelberg (DE); SCHUMACHER, Karl-Heinz, 67433 Neustadt (DE); HARTZ, Oliver, 67117 Limburgerhof (DE)
(74) Vertreter: BASF IP Association
(86) Internationale Anmeldenummer: PCT/EP2013/072168
(87) Internationale Veröffentlichungsnummer: WO 2014/067833

(56) Entgegenhaltungen:
- DE-A1-102007 052 966

## Beschreibung

Die Erfindung betrifft die Verwendung von wässrigen Polyurethandispersionen zur Kaschierung von Formkörpern, wobei das Polyurethan aus amorphen Polyesterpolyolen sowie aus Polycarbonatpolyolen aufgebaut ist. Die Erfindung betrifft auch ein Verfahren zur Herstellung von kaschierten Formkörpern sowie die nach dem Verfahren hergestellten Formkörper.

Die Beschichtung von Formteilen durch Verklebung bzw. Kaschierung mit Folien wird sowohl bei der Möbelherstellung als auch im Autoinnenbereich verwendet. Hierbei wird häufig nach dem sogenannten Thermoaktivierverfahren gearbeitet. Die verwendeten Klebstoffsysteme müssen eine gute Thermoaktivierbarkeit besitzen, das heißt, dass sich beim Erwärmen von bei Raumtemperatur nicht oder nur wenig klebrigen Systemen eine ausreichende Klebrigkeit herausbildet. Für solche Systeme ist einerseits eine niedrige, nicht allzu sehr über Raumtemperatur liegende Aktivierungstemperatur wünschenswert. Andererseits wird eine möglichst hohe Wärmestandfestigkeit des kaschierten Formteils benötigt, d.h. dass sich die aufkaschierte Folie später bei höheren Temperaturen möglichst nicht mehr von dem Formteil ablöst.

Als Klebstoffsysteme können u.a. wässrige Polyurethandispersionen eingesetzt werden, sofern sie die geforderten Anforderungen erfüllen. Zum Stand der Technik gehörigen wässrige Polyurethandispersionen, wie sie z.B. in WO 09/55696, WO 09/55697 und EP 2090603 beschrieben sind. Die Polyurethane werden in der Regel aufgebaut aus Polyesterdiolen, Polyisocyanaten und aminischen Kettenverlängerern.

Eine andere Anwendungstechnologie von wässrigen Polyurethandispersionen ist die Kontaktverklebung. Während bei der technischen Kaschierung nach dem Thermoaktivierverfahren nur eine Seite der beiden miteinander zu verklebenden Substrate mit Klebstoff beschichtet wird und die Verklebung unter gleichzeitiger Anwendung von erhöhter Temperatur und Druck erfolgt, werden bei der Kontaktverklebung beide Seiten der zu verklebenden Substrate mit einem autoadhäsiven Klebstoff beschichtet und die Verklebung erfolgt ohne Temperaturerhöhung bei Raumtemperatur unter Anwendung von Druck. Bei der technischen Kaschierung nach dem Thermoaktivierverfahren wird in der Regel eine größere Haftfestigkeit erzielt als bei der Kontaktverklebung. Wenn allerdings eines der beiden Substrate temperaturempfindlich ist (z.B. Kaschierung von Leder) muss auf das Kontaktklebeverfahren zurückgegriffen werden, trotz der damit verbundenen schlechteren Haftfestigkeit. Gewünscht sind daher Systeme, welche die hohe Haftfestigkeit von thermoaktivierbaren Klebstoffen aufweisen, wobei aber die Aktiviertemperatur möglichst niedrig ist (z.B. kleiner 60°C) um auch thermisch sensible Substrate verkleben zu können. Trotz der niedrigen Aktiviertemperatur sollten die Klebstoffe aber nach der Verklebung eine möglichst hohe Wärmestandfestigkeit aufweisen, d.h. dass sich die Verklebung bei höheren Temperaturen nicht wieder löst.

Außerdem haben die bisher bei der Kaschierung von Formkörpern nach dem Thermoaktivierverfahren eingesetzten thermoaktivierbaren Polyurethane in der Regel bei Raumtemperatur eine nicht ausreichende Klebrigkeit, um auch in Kontaktklebeverfahren eingesetzt werden zu können. Neben den für die Kaschierung wichtigen Parametern der Aktivierungstemperatur und der Wärmestandfestigkeit wären hierfür auch eine gute Kontaktklebrigkeit bzw. hohe Scherwerte nach Kontaktverklebung erforderlich.

Die Aufgabe bestand darin, von organischen Lösungsmitteln möglichst freie, wässrige Klebstoffe zu entwickeln, welche als Kaschierklebstoffe zur Herstellung von kaschierten Formkörpern in Thermoaktivierverfahren einsetzbar sind, möglichst niedrige Aktivierungstemperaturen besitzen, eine möglichst gute Wärmestandfestigkeit der kaschierten Formteile bewirken und zusätzlich noch eine verbesserte Kontaktklebrigkeit aufweisen, sodass die Klebstoffe in Kontaktklebeverfahren einsetzbar sind ohne dass die für die Verwendung im Thermoaktivierverfahren erforderlichen Eigenschaften unangemessen beeinträchtigt werden.

Es wurde gefunden, dass die Aufgabe gelöst werden kann durch Verwendung der nachstehend beschriebenen Polyurethandispersionen (nachfolgend auch kurz Klebstoff genannt). Gegenstand der Erfindung ist die Verwendung von wässrigen Polyurethandispersionen zur Kaschierung von Formkörpern, wobei das Polyurethan von mindestens einem amorphen Polyesterpolyol abgeleitete Einheiten und von mindestens einem Polycarbonat abgeleitete Einheiten aufweist.

Gegenstand der Erfindung ist auch ein Verfahren zur Herstellung von kaschierten Formkörpern, wobei man
a) einen Formkörper zur Verfügung stellt,
b) eine Folie zur Verfügung stellt,
c) eine nachstehend näher beschriebene wässrige Polyurethandispersion zur Verfügung stellt und
d) die wässrige Polyurethandispersion auf die Folie und/oder den Formkörper aufträgt und die Folie auf den Formkörper aufkaschiert, wobei die Aufkaschierung vorzugsweise unter Thermoaktivierung erfolgt.

Gegenstand der Erfindung sind auch folienkaschierte Formkörper, hergestellt nach dem erfindungsgemäßen Verfahren, wobei das Folienmaterial vorzugsweise ausgewählt ist aus der Gruppe bestehend aus Polyvinylchlorid, das auch Weichmacher enthalten kann, und thermoplastischem Polyolefin (TPO) und Kombinationen daraus.

Der erfindungsgemäß zu verwendende Klebstoff besteht im Wesentlichen aus mindestens einem in Wasser dispergiertem Polyurethan als polymeres Bindemittel und optional Zusatzstoffen wie Füllstoffen, Verdicker, Entschäumer etc. Das polymere Bindemittel liegt vorzugsweise als Dispersion in Wasser oder auch in einem Gemisch aus Wasser und wasserlöslichen organischen Lösungsmitteln mit Siedepunkten von vorzugsweise unter 150°C (1 bar) vor. Besonders bevorzugt ist Wasser als einziges Lösungsmittel. Bei Gewichtsangaben zur Zusammensetzung des Klebstoffs wird das Wasser oder sonstige Lösemittel nicht mitberechnet.

Amorph sind Feststoffe, deren Bausteine nicht in Kristallgittern angeordnet sind, d.h. nicht kristallin sind. Amorphe Polyesterpolyole sind erfindungsgemäß insbesondere solche Polyesterpolyole, welche im Temperaturbereich von -30°C bis +60°C nicht kristallin sind, d.h. keinen Schmelzpunkt aufweisen.

Bevorzugt enthält das Polyurethan von ein oder mehreren amorphen Polyesterdiolen abgeleitete Einheiten in einer Menge von mehr als 10 Gew.-% oder mehr als 25 Gew.%, besonders bevorzugt mindestens 30 Gew.%, bezogen auf das Polyurethan.

Bevorzugt enthält das Polyurethan von ein oder mehreren Polycarbonaten abgeleitete Einheiten in einer Menge von mehr als 10 Gew.-% oder mehr als 25 Gew.%, besonders bevorzugt mindestens 30 Gew.%, bezogen auf das Polyurethan.

Das Molverhältnis von amorphen Polyesterpolyol (a) zu Polycarbonat (b) liegt vorzugsweise im Bereich von 1:10 bis 10:1 oder von 1:5 bis 5:1, insbesondere von 1:2 bis 2:1.

Insgesamt ist das Polyurethan vorzugsweise aufgebaut im Wesentlichen aus:
a) mindestens einem amorphen Polyesterdiol mit einem Molekulargewicht von über 500 bis 4000 g/mol,
b) mindestens einem Polycarbonat mit einem Molekulargewicht über 500 bis 4000 g/mol,
c) mindestens einem organischen Diisocyanat oder einem eine arithmetische mittlere NCO-Funktionalität von 1,9 bis 2,3 aufweisenden Gemisch aus organischen Isocyanatverbindungen, vorzugsweise Isophorondiisocyanat oder Hexamethylendiisocyanat oder deren Gemisch,
d) optional mindestens einem zweiwertigen Alkohol eines mittleren Molekulargewichts von 62 bis 500 g/mol und
e) optional mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, und Diaminoverbindungen, welche zusätzlich mindestens eine ionische Gruppe oder mindestens eine in eine ionische Gruppe überführbare Gruppe enthalten, vorzugsweise ausgewählt aus Diaminocarbonsäuren, Diaminosulfonsäuren und den jeweiligen Carbonsäure- und Sulfonsäuresalzen,
f) optional weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) optional von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Eine in eine ionische Gruppe überführbare Gruppe ist z.B. eine Säuregruppe, insbesondere eine Carbonsäuregruppe oder eine Sulfonsäuregruppe.

Insgesamt ist das Polyurethan vorzugsweise aufgebaut aus:
a) 10 bis 80 Gew.% an mindestens einem amorphen Polyesterdiol mit einem Molekulargewicht über 500 bis 4000 g/mol,
b) 10 bis 80 Gew.% an mindestens einem Polycarbonat mit einem Molekulargewicht über 500 bis 4000 g/mol,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen,
d) 2 bis 10 Gew.% an mindestens einem zweiwertigen Alkohol eines mittleren Molekulargewichts von 62 bis 500 g/mol und
e) 0 bis 10, z.B. 2 bis 10 Gew.% an mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, und Diaminoverbindungen, welche zusätzlich mindestens eine ionische Gruppe oder mindestens eine in eine ionische Gruppe überführbare Gruppe enthalten,
f) 0 bis 5 Gew.% an weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) 0 bis 5 Gew.% an von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Bei den Polycarbonaten (b) handelt es sich um Verbindungen mit freien Hydroxygruppen, d.h. um Polyole, insbesondere um Diole. Im Hinblick auf gute Filmbildung und Elastizität kommen als Diole (a) und (b) vornehmlich höhermolekulare Diole in Betracht, die ein Molekulargewicht von über 500 bis 4000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Als Komponente (a) werden bevorzugt amorphe Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Zur Herstellung des amorphen Polyesterdiols a) wird ein Gemisch von Carbonsäuren verwendet bestehend aus mindestens einer aliphatischen Dicarbonsäure mit 3 bis 10, vorzugsweise 4 bis 8 C-Atomen und mindestens einer aromatischen Dicarbonsäure. Das molare Mischungsverhältnis ist von 0,5:1 bis 2:1. Ein bevorzugtes Dicarbonsäuregemisch ist Adipinsäure/Isophthalsäure, im Verhältnis von 0,5:1 bis 2:1.

Zur Herstellung der Polyesterdiole a) und b) kommen als mehrwertige Alkohole z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol. Zur Herstellung der amorphen Polyesterdiole a) werden vorzugsweise mindestens ein Alkandiol mit 2 bis 10, vorzugsweise 4 bis 8 C-Atomen eingesetzt.

Bevorzugt ist das amorphe Polyesterdiol, hergestellt aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von vorzugsweise 0,5:1 bis 2:1 und mindestens einem Alkandiol mit 2 bis 10, vorzugsweise 4 bis 8 C-Atomen. Besonders bevorzugt ist das amorphe Polyesterdiol, hergestellt aus einem Dicarbonsäuregemisch von Adipinsäure/Isophthalsäure, insbesondere im (molaren) Verhältnis von 0,5:1 bis 2:1 sowie 1,6-Hexandiol. Ein geeignetes kommerzielles Produkt ist beispielsweise Lupraphen® VP9206.

Bei den Polycarbonaten (b) handelt es sich vorzugsweise um Makrodiole, insbesondere um Polycarbonatdiole, wie sie z.B. durch Umsetzung von Phosgen mit einem Überschuss von den als Aufbaukomponenten für die Polyesterpolyole genannten niedermolekularen Alkohole erhalten werden können. Geeignet sind z.B. Alkandiolpolycarbonate mit vorzugsweise 2 bis 10, insbesondere 4 bis 8 C-Atome in der Alkankette, z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt ist Neopentylglykol. Zur Herstellung der Polycarbonate (b) wird vorzugsweise mindestens ein Alkandiol mit 2 bis 10, vorzugsweise 4 bis 8 C-Atomen eingesetzt und bei dem Polycarbonat handelt es sich vorzugsweise um ein Hydroxy-terminiertes Polycarbonat.

Es können als optionale zusätzliche Komponenten f) auch Polyesterdiole auf Lacton-Basis verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, ß-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Es können als optionale zusätzliche Komponenten f) auch Polyetherdiole mitverwendet werden. Polyetherdiole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxyphenyl)-propan oder Anilin erhältlich. Polyetherdiole sind z.B. Polypropylenoxid, Polytetrahydrofuran eines zahlenmittleren Molekulargewichts von 240 bis 5000, und vor allem 500 bis 4500 g/mol. Ein besonders bevorzugtes Polyetherdiol als Aufbaukomponente für die Polyurethane ist Polytetrahydrofuran.

Als optionale zusätzliche Komponenten f) können auch Polyhydroxyolefine mitverwendet werden, bevorzugt solche mit 2 endständigen Hydroxylgruppen, z.B. α,-ω-Dihydroxypolybutadien, α,-ω-Dihydroxypolymethacrylester oder α,-ω-Dihydroxypolyacrylester. Weitere geeignete Polyole sind Polyacetale, Polysiloxane und Alkydharze.

Als organische Diisocyanate c) kommen sowohl aliphatische als auch aromatische Diisocyanate in Betracht. Zu nennen sind insbesondere Diisocyanate der allgemeinen Formel X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte molare Mischungsverhältnis der aliphatischen zu aromatischen Isocyanate 4 : 1 bis 1 : 4 beträgt. Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen. Besonders bevorzugt ist das amorphe Polyurethan aufgebaut aus organischen Diisocyanaten, die ausgewählt sind aus Isophorondiisocyanat, Hexamethylendiisocyanat und einem Gemisch aus Isophorondiisocyanat und Hexamethylendiisocyanat.

Verbindungen der Komponente e) enthalten insbesondere anionische Gruppen wie die Sulfonat-, die Carboxylat- oder die Phosphatgruppe. Der Begriff ionische Gruppe soll solche Gruppen mit umfassen, die in ionische Gruppen überführt werden können. Entsprechend werden auch die durch Neutralisation in ionische Gruppen überführbaren Carbonsäure-, Sulfonsäure-oder Phosphorsäuregruppen als ionische Gruppen aufgefasst. Als Verbindung e) bevorzugt sind Dihydroxycarbonsäuren, Diaminocarbonsäuren und Diaminosulfonsäuren und deren jeweiligen Carbonsäure- und Sulfonsäuresalze.

In Betracht kommen üblicherweise aliphatische, cycloaliphatische, araliphatische oder aromatische Carbonsäuren und Sulfonsäuren, die mindestens eine alkoholische Hydroxylgruppe tragen. Bevorzugt sind Dihydroxycarbonsäuren, insbesondere Dihydroxyalkylcarbonsäuren, vor allem mit 3 bis 10 C-Atomen, wie sie auch in der US-A 3,412,054 beschrieben sind. Insbesondere sind Verbindungen der allgemeinen Formel 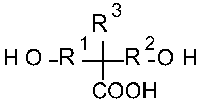 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Neben den bifunktionellen Carbonsäuren können weitere Monomere mit hydrophilen Gruppen verwendet werden, z.B. entsprechende Dihydroxysulfonsäuren und Dihydroxyphosphonsäuren wie 2,3-Dihydroxypropanphosphonsäure oder Diaminosulfonsäuren. Besonders bevorzugt sind N-(2-Aminoethyl)-2-aminoethylsulfonsäure und die entsprechenden Sulfonatsalze.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylat- bzw. Sulfonatgruppen in Form ihrer Salze mit einem Alkaliion oder einem Ammoniumion als Gegenion vor. Zur Überführung von potentiell anionischen Gruppen, z.B. Carbonsäuregruppen oder Sulfonsäuregruppen in lonengruppen können übliche anorganische oder organische Basen wie KOH, NaOH, Ammoniak oder Alkylamine z.B. Trialkylamine verwendet werden.

Die Härte und der Elastizitätsmodul der Polyurethane lassen sich erhöhen, wenn als Diole zusätzlich zweiwertige Alkohole d) mit einem Molekulargewicht von etwa 62 bis 500, vorzugsweise von 62 bis 400 oder 62 bis 200 g/mol, eingesetzt werden, vorzugsweise in einer Menge von 2 bis 10 Gew.%, bezogen auf das Polyurethan. Als Monomere d) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Als Diole d) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)-cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Besonders bevorzugt sind Butan-1,4-diol und Neopentylglykol.

Bevorzugt beträgt in den Polyurethanen der Anteil der Diole a) und b), bezogen auf die Gesamtmenge aller Diole 10 bis 100 mol-% oder 60 bis 100 mol% und der Anteil der Diole d), bezogen auf die Gesamtmenge der Diole 0 bis 90 mol-%, oder 0 bis 40 mol%.

Die Monomere (f), die von den Monomeren (a) bis (e) verschieden sind und welche optional auch Bestandteile des Polyurethans sind, dienen im Allgemeinen der Vernetzung oder der Kettenverlängerung. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z.B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge aller isocyanatreaktiven mehrwertigen Verbindungen, als Komponente (f) mindestens ein Polyamin mit mindestens 2 gegenüber Isocyanaten reaktiven Aminogruppen. Für den gleichen Zweck können als Monomere (f) auch höher als zweiwertige Isocyanate eingesetzt werden. Handelsübliche Verbindungen sind beispielsweise das Isocyanurat oder das Biuret des Hexamethylendiisocyanats.

Monomere (g), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-alpha,alpha-dimethylbenzylisocyanat (TMI) und Ester von Acryl- oder Methacrylsäure wie Hydroxyethylacrylat oder Hydroxyethylmethacrylat.

Klebstoffe mit einem besonders guten Eigenschaftsprofil erhält man vor allem dann, wenn als Diisocyanate (c) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (e) durch Diaminomonosufonsäure-Alkali-Salze; wobei das Na-Salz am besten geeignet ist.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (g) sowie ihre jeweiligen Molmengen so gewählt, dass der Quotient aus der Summe aller NCO-Gruppen und der Summe aller NCO-reaktiven OH-Gruppen, d.h. das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,
0,5 : 1 bis 2 : 1, bevorzugt 0,7:1 bis 1,5:1 oder 0,8 : 1 bis 1,3:1 besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (g) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Aufbaukomponenten zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt. Die Polyurethane liegen vorzugsweise als wässrige Dispersion vor und werden in dieser Form verwendet. Der pH-Wert der Polymerdispersion wird vorzugsweise auf pH größer 5, insbesondere auf einen pH-Wert zwischen 5,5 und 8,5 eingestellt.

Der erfindungsgemäß zu verwendende Klebstoff enthält Säuregruppen oder weitere reaktive Gruppen, die untereinander oder mit externen Vernetzungsmitteln eine Vernetzungsreaktion eingehen können. Diese reaktiven Gruppen liegen vorzugsweise in einer Menge von 0,0001 bis 0,5 Mol, besonders bevorzugt von 0,0005 bis 0,5 Mol/100 g Klebstoff vor. Carboxylgruppen werden auch durch Verseifungsreaktionen gebildet, so dass auch ohne einen anfänglichen Gehalt an Carboxylgruppen im Polyurethan eine Vernetzung eintreten kann.

In einer Ausführungsform der Erfindung enthält der Polyurethandispersionsklebstoff mindestens einen externen Vernetzer. Geeignete Vernetzungsmittel sind z.B. Polyisocyanate mit mindestens zwei Isocyanatgruppen, z.B. aus Diisocyanaten gebildete Isocyanurate, Verbindungen mit mindestens einer Carbodiimidgruppe, chemisch blockierte Isocyanate, verkapselte Isocyanate, verkapselte Uretdione, Biurete oder Allophanate. Geeignet sind auch Aziridine, Oxazoline und Epoxide. Besonders bevorzugt sind aliphatische Polyisocyanate, insbesondere wasseremulgierbare Polyisocyanate, z.B. Basonat® LR9056. Der externe Vernetzer wird vorzugsweise in einer Menge von 0,5 bis 10 Gew.%, bezogen auf Feststoffgehalt der Dispersion, eingesetzt. Ein externer Vernetzer ist eine Verbindung, welche vor der Vernetzungsreaktion nicht an das Polyurethan gebunden ist sondern in der Polyurethandispersion gelöst oder dispergiert ist. In Betracht kommen aber auch Vernetzer, die an das Polyurethan gebunden sind (interne Vernetzer). In einer Ausführungsform wird die Polyurethandispersion als Zweikomponenten-Klebstoffzusammensetzung zusammen mit mindestens einer Polyisocyanatverbindung eingesetzt.

Die erfindungsgemäßen Polyurethandispersionen werden erfindungsgemäß in wässrigen Klebstoffzubereitungen für die Herstellung von kaschierten Formkörpern verwendet, d.h. zur Herstellung von Verbundkörpern durch dauerhafte Verklebung von großflächigen, biegsamen Folien auf festen (dreidimensional geformten, formstabilen, nicht flexiblen) Formkörpern als Substrat. Die biegsamen Folien sind insbesondere ausgewählt aus Polymerfolien und Metallfolien. Sie werden mit den festen Formkörpern, z. B. Formteilen aus Metall, lackiertem Metall, Holz, Holzwerkstoffen, Fasermaterialien oder Kunststoff verklebt. Bei den Formteilen kann es sich um Möbel oder um Möbelteile, d.h. um Bestandteile von Möbeln oder um Automobilinnenteile handeln.

Die vorliegende Erfindung betrifft somit auch ein Verfahren zur Herstellung von folienkaschierten Formkörpern, bei dem man eine oben beschriebene wässrige Polyurethandispersion zur Verfügung stellt. Hierbei können die wässrigen Polymerdispersionen als solche oder nach Konfektionierung mit üblichen Hilfsstoffen als wässrige Klebstoffzubereitungen eingesetzt werden. Übliche Hilfsstoffe sind beispielsweise Netzmittel, Verdicker, Schutzkolloide, Lichtschutzstabilisatoren, Biozide, Entschäumer usw. Die erfindungsgemäßen Klebstoffzubereitungen benötigen nicht den Zusatz von weichmachenden Harzen (Tackifiern) oder anderen Weichmachern. Die erfindungsgemäßen Polyurethandispersionen können für die erfindungsgemäße Anwendung auch mit anderen Polymerdispersionstypen abgemischt werden, insbesondere mit Polyacrylat-, Polyvinylacetat- und Polyethylenvinylacetatdispersionen. Unter diesen Abmischdispersionen sind Polyethylenvinylacetatdispersionen bevorzugt. Typische Gewichtsmengenverhältnisse Polyurethandispersion: Abmischdispersion liegen im Bereich 3:1 bis 1:2 (bezogen jeweils auf Feststoffgehalt).

In einer Ausführungsform wird die erfindungsgemäße Polymerdispersion als Einkomponentenmittel angewendet, d.h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine Vernetzungskomponente, wie z.B. ein wasseremulgierbares Isocyanat, zugesetzt wird. Wenigstens eines der Substrate kann auf der mit dem Klebstoff beschichteten Seite bedruckt oder metallisiert sein.

Gegenstand der Erfindung ist auch ein Verfahren zur Herstellung von kaschierten Formkörpern, dadurch gekennzeichnet, dass man
a) einen Formkörper zur Verfügung stellt,
b) eine Folie zur Verfügung stellt,
c) eine wässrige Polyurethandispersion gemäß einem der vorhergehenden Ansprüche zur Verfügung stellt und
d) die wässrige Polyurethandispersion auf die Folie und/oder den Formkörper aufträgt und die Folie auf den Formkörper aufkaschiert.

Das Aufkaschieren erfolgt vorzugsweise unter Druck und/oder Temperaturerhöhung, insbesondere durch Thermoaktivierung.

In einer Ausführungsform handelt es sich bei den kaschierten Formkörpern um folienbeschichtete Möbel. Bei den erfindungsgemäß hergestellten folienbeschichteten Möbeln handelt es sich um Verbundkörper. Die Verbundkörper können zwischen Folie und Klebstoffschicht und/oder zwischen Substrat und Klebstoffschicht zusätzlich Primerschichten zur Haftverbesserung aufweisen. Die zu verklebenden Folien und Substrate können mit Haftvermittlern vorbehandelt sein. Aufgrund der bereits guten Hafteigenschaften erfindungsgemäßer Klebstoffe ist die Anwendung von Primern aber nicht unbedingt erforderlich.

Gegenstand der Erfindung ist auch ein Verfahren zur Herstellung von folienkaschierten Formteilen für den Automobilbau, wobei
a) eine oben beschriebene, erfindungsgemäße Klebstoffzusammensetzung, eine Polymerfolie und ein z.B. für den Einbau in ein Automobil vorgesehenes Formteil zur Verfügung gestellt werden,
b) die Klebstoffzusammensetzung auf die Polymerfolie und/oder auf das Formteil aufgebracht werden und
c) anschließend die Polymerfolie unter Druck und/oder Temperaturerhöhung mit dem Formteil verklebt wird.

Bei den Formteilen kann es sich auch um Formteile handeln, welche aus synthetischen oder natürlichen Fasern oder Spänen aufgebaut sind, die durch ein Bindemittel zu einem Formteil gebunden sind; insbesondere sind auch Formteile aus Kunststoff, z. B. ABS, geeignet. Die Formteile können eine beliebige Form haben.

Besonders bevorzugte Folien sind Polymerfolien. Als Polymerfolie werden insbesondere biegsame flächige Kunststoffe in einer Dicke von 0.05 Millimeter bis 5 Millimeter, vorzugsweise von 0,25 bis 1 mm verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien werden üblicherweise durch Streichen, Gießen, Extrusion oder besonders bevorzugt durch Kalandrieren hergestellt und sind typischerweise in Rollen kommerziell erhältlich oder werden vor Ort hergestellt. Sie können einschichtig oder mehrschichtig aufgebaut sein. Der Kunststoff der Polymerfolien ist vorzugsweise ein thermoplastischer Kunststoff, z.B. Polyester, wie Polyethylenterephthalat (PET), thermoplastische Polyolefine (TPO) wie Polyethylen, orientiertem Polypropylen (OPP), ungerecktes Polypropylen (CPP), Polyvinylchlorid, insbesondere Weich-PVC, Polyacetate, Ethylen/Vinylacetat Copolymere (EVA), ASA (Acrylnitril/Styrol/Acrylsäureester Copolymere), PUR (Polyurethan), PA (Polyamid), Poly(meth)acrylate, Polycarbonate, oder deren Kunststofflegierungen, Zellophan, mit Metall, z. B. Aluminium, beschichtete (bedampfte) Polymerfolien (kurz : metallisierte Folien) oder Metallfolien, z.B. aus Aluminium. Die genannten Folien können beispielsweise auch mit Druckfarben bedruckt sein. Besonders bevorzugt sind Hart-PVC und thermoplastisches Polyethylenterephthalat (PET).

Bei den Möbelteilen kann es sich auch um Formteile handeln, welche aus synthetischen oder natürlichen Fasern oder Spänen aufgebaut sind, die durch ein Bindemittel zu einem Formteil gebunden sind. Die Formteile können eine beliebige Form haben. Besonders bevorzugt sind MDF-Platten (mitteldichte Holzfaserplatten).

Die Beschichtung der Folien und Substrate mit dem Klebstoff kann nach üblichen Auftragsverfahren erfolgen, beispielsweise durch ein Sprüh-, Streich-, Rakel-, Stempel-, Walz- oder Gießauftragsverfahren. Bevorzugt ist ein Sprühauftrag.

Die aufgebrachte Klebstoffmenge beträgt vorzugsweise 0,5 bis 100 g/m², besonders bevorzugt 2 bis 80 g/m², ganz besonders bevorzugt 10 bis 70 g/m², bezogen auf Klebstoff. Vorzugsweise wird nur die Folie oder nur das Substrat einseitig beschichtet. Es kommt jedoch auch eine Beschichtung von beiden zu verklebenden Einheiten, d.h. von Folie und Substrat in Betracht. Nach der Beschichtung erfolgt üblicherweise eine Trocknung, vorzugsweise bei Raumtemperatur oder Temperaturen bis zu 80 °C, um Wasser oder sonstige Lösemittel zu entfernen.

Die mit der Klebstoffzusammensetzung beschichtete Folie oder das beschichtete Substrat können vor der Verklebung gelagert werden. Flexible Folien können z. B. auf Rollen aufgewickelt werden. Zur Verklebung werden die zu verklebenden Teile zusammengefügt. Der Klebstoff wird thermisch aktiviert. Die Temperatur in der Klebstoffschicht beträgt vorzugsweise mindestens 30°C oder mindestens 40 °C, z.B. von 30 bis 200 °C, oder von 40 bis 180°C. Ein besonderer Vorteil der Erfindung liegt in einer guten Aktivierbarkeit des Klebstoffs auch bei Temperaturen unterhalb des mit herkömmlichen Klebstoffen verwendeten Temperaturbereiches von 60-70°C, z.B. bei Temperaturen von weniger als 60°C, z.B. maximal 58°C, maximal 55 °C oder maximal 50 °C.

Die Verklebung erfolgt vorzugsweise unter Druck. Dazu können z.B. die zu verklebenden Teile mit einem Druck von mindestens 0,005 oder mindestens 0,01 oder mindestens 0,08 N/mm², z.B. 0,005 bis 5 N/mm² oder 0,01 bis 0,8 N/mm² zusammengepresst werden. Der Anpressdruck kann z.B. durch das Anlegen eines Unterdruckes zwischen Folie und Substrat und/oder durch Luftdruck erzeugt werden.

Die erhaltenen Verbundkörper zeichnen sich durch hohe mechanische Festigkeit auch bei erhöhten Temperaturen (Wärmestandfestigkeit) oder unter sich stark ändernden Klimabedingungen (Klimabeständigkeit) aus.

Besondere Bedeutung hat das erfindungsgemäße Verfahren für die Herstellung von mit Folien, insbesondere mit Dekorfolien kaschierten MDF-Platten für Möbelfronten. Hierfür wird insbesondere das sogenannte 3D-Pressverfahren verwendet. Die Klebstoffkomponenten werden miteinander vermischt und auf den Formkörper, z.B. eine MDF-Platte aufgetragen. Anschließend erfolgt gegebenenfalls ein Trocknen, z.B. bei Raumtemperatur oder im Trockenkanal bei z.B. 40-50°C. Der getrocknete Klebstoff wird mittels der vorgewärmten Folie thermoaktiviert und auf das Substrat gepresst, z.B. unter Vakuum und/oder durch Luftdruck.

Die hier benutzten Folien sind vielfach Kunststoffdekorfolien und können eine Oberflächenstruktur aufweisen. Diese Oberflächenstruktur auf der Kunststofffolie kann beispielsweise vor, während oder nach dem Verkleben eingeprägt werden.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung und/oder Formkörpersubstrat verwendet werden. Außerdem können die Folien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Besondere Bedeutung hat das erfindungsgemäße Verfahren auch für die Herstellung von Einbauteilen für Fahrzeuge. Besonders bevorzugt ist die Verwendung des erfindungsgemäßen Klebstoffs für die Herstellung von Innenauskleidungsteilen für Automobile. Beispiele für derartige Innenauskleidungsteile sind Türinnenverkleidungen, Schalttafeln, Armaturenbretter, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen. Hierfür wird insbesondere ein Vakuumtiefziehverfahren oder eine Presskaschierung im Siegelverfahren verwendet. Beim Vakuumtiefziehverfahren wird der Klebstoff auf den Formkörper aufgetragen. Anschließend erfolgt gegebenenfalls ein Ablüften, z.B. bei Raumtemperatur oder im Trockenkanal bei vorzugsweise maximal 40°C. Typischerweise wird die aufzuklebende Folie, z.B. eine Dekorfolie aus luftundurchlässigem Material, in einem Rahmen luftdicht eingespannt. Unterhalb der Folie befindet sich eine Unterform auf die der Formkörper gelegt wird. Unterform und Formkörper sind durchbohrt beziehungsweise luftdurchlässig. Das Gerät ist unterwärts weiter luftdicht abgeschlossen. Beim Absaugen der Luft aus dieser Vorrichtung schmiegt sich nun die Folie unter dem auf seine Oberfläche lastenden atmosphärischen Druck passgenau auf den Formkörper. Die Folie wird vor dem Anlegen des Vakuums, bzw. Unterdruckes, erhitzt. Die Folie ist wegen des zu erzeugenden Vakuums, bzw. Unterdruckes, luftundurchlässig. Beim Presskaschierungsverfahren wird der Klebstoff ebenfalls auf dem Formkörper und gegebenenfalls auf der zur verklebenden Folie aufgetragen, zumindest jedoch auf dem Formkörper. Anschließend erfolgt gegebenenfalls ein Ablüften, typischerweise bei Raumtemperatur oder im Trockenkanal bei vorzugsweise maximal 40°C. Die Verklebung von Formkörpern mit der Folie erfolgt nach Wärmeaktivierung unter Fügen und Pressen. Die hier benutzten Folien sind vielfach Kunststoffdekorfolien und weisen eine Oberflächenstruktur auf. Diese Oberflächenstruktur auf der Kunststofffolie kann beispielsweise vor, während oder nach dem Verkleben eingeprägt werden.

Es ist ein Vorteil der Erfindung, dass die erfindungsgemäß einzusetzenden Polyurethandispersionen bei der Herstellung von kaschierten Formteilen sowohl bessere Scherwerte bei der Kontaktverklebung als auch bessere Wärmestandfestigkeiten und niedrigere Aktiviertemperaturen bei Anwendung in Thermoaktivierverfahren bewirken.

### Beispiele

### Beispiel B1

In einem Rührkolben mit Rückflusskühler und Thermometer wurden 323,5 g (0,16 mol) eines Polyesterols einer OH-Zahl 55,5 aus Adipinsäure/Isophthalsäure und Hexandiol-1,6, 315,5 g (0,16 mol) eines Polycarbonats auf Basis Hexandiol der OHZ 56,9 (Eternacoll® UH 200) und 29,2 g (0,28 mol) Neopentylglykol sowie 66 g Aceton vorgelegt und mit 0,1 g Tetrabutylorthotitanat versetzt. Nach Zugabe von 73,4 g (0,33 mol) Isophorondiisocyanat und 55,5 g (0,33 mol) Hexamethylendiisocyanat wird bei 115 °C Außentemperatur 210 min lang gerührt. Dann wurde mit 1230 g Aceton verdünnt. Der NCO-Gehalt der Lösung wurde zu 0,407 % bestimmt. Hierzu wurden 37,3 g (0,09 mol) einer wässrigen Lösung von Na-(N-(2-Aminoethyl)-2-amino-ethylsulfat gegeben. Nach 10 Minuten wurde mit 1200 g Wasser dispergiert. Nach Destillation des Acetons wurde eine wässrige Polyurethandispersion mit einem Festgehalt von 36% erhalten.

### Beispiel B2

In einem Rührkolben mit Rückflusskühler und Thermometer wurden 323,5 g (0,16 mol) eines Polyesterols einer OH-Zahl 55,5 aus Adipinsäure/Isophthalsäure und Hexandiol-1,6, 315,5 g (0,16 mol) eines Polycarbonats auf Basis Hexandiol der OHZ 56,9 (Eternacoll® UH 200) und 25,2 g (0,28 mol) 1,4-Butandiol sowie 66 g Aceton vorgelegt und mit 0,1 g Tetrabutylorthotitanat versetzt. Nach Zugabe von 73,4 g (0,33 mol) Isophorondiisocyanat und 55,5 g (0,33 mol) Hexamethylendiisocyanat wird bei 115 °C Außentemperatur 210 min lang gerührt. Dann wurde mit 1230 g Aceton verdünnt. Der NCO-Gehalt der Lösung wurde zu 0,241 % bestimmt. Hierzu wurden 37,3 g (0,09 mol) einer wässrigen Lösung von Na-(N-(2-Aminoethyl)-2-aminoethylsulfat gegeben. Nach 10 Minuten wurde mit 1200 g Wasser dispergiert. Nach Destillation des Acetons wurde eine wässrige Polyurethandispersion mit einem Festgehalt von 39,7% erhalten.

### Vergleichsbeispiel V1

- Luphen® D200A:: Polyurethandispersion, basierend auf einem kristallinen Polyesterdiol mit einem Feststoffgehalt von 40%, für die Verklebung nach dem Thermoaktivierverfahren.

### Vergleichsbeispiel V2

- Luphen® D259A:: Polyurethandispersion, basierend auf einem amorphen Polyetherdiol mit einem Feststoffgehalt von 40%, für die Verklebung nach dem Kontaktverfahren.

### Messmethode "Wärmestandfestigkeit" (WSF, Kantenschrumpf))

35-45 g /m² (fest) des Klebstoffes, bestehend aus 100 Teilen der Polyurethandispersion und 12 Teilen (fest auf fest) des wasseremulgierbaren Isocyanatvernetzers Basonat® F 200 WD wurden auf ein Faserformteil mit dreidimensionaler Oberfläche, wie es zur Herstellung von Möbelformteilen verwendet wird, aufgesprüht und getrocknet. In einer handelsüblichen Vakuum-Tiefzieh-Presse (Bürkle Thermoformer) wurde eine Hart-PVC-Möbelfolie (Roxan Typ 5371744 Buche Taunus) zukaschiert. Die Kaschierung erfolgte bei einer Heizplatten-Temperatur von 115 °C, und einem Druck von 4,5 bar; der Druck wurde während 45 Sekunden aufrecht erhalten. Dabei ergab sich eine Aktiviertemperatur im Klebstoff von etwa 55°C. Die Vakuumzeit betrug etwa 6 s. Das erhaltene Formteil ist bis zum Rand mit der Folie kaschiert.

Die Kaschierung aus Formteil und Folie wurde zunächst 7 Tage bei Raumtemperatur gelagert. Danach erfolgte eine Lagerung bei 75 °C bis 90 °C, wobei die Lagerungs-Temperatur jede Stunde um 5 °C erhöht wurde, beginnend bei 75°C. Nach jeder Stunde wurde an den Rändern des Formteils mit einer skalierten Lupe ausgemessen, ob und wieweit die kaschierte Folie geschrumpft ist, d. h. wie viel mm sich der Folienrand vom Rand des Formteils in Richtung Mitte des Prüfkörpers bewegt hat. Je geringer dieser Wert ist, umso besser ist die Wärmestandfestigkeit. Angegeben wird die Temperatur, bei welcher der Kantenschrumpf im Formteil noch < 0,3 mm beträgt.

### Messmethode "Schälwert bei Aktiviertemperatur 50 °C"

Die Haftkraft (Peel Test, Schälfestigkeit) wird wie folgt untersucht:
Eine 5 cm breite Hart-PVC-Möbelfolie (Roxan Typ 5371744 Buche Taunus) wurde mit 35-45 g /m² (fest) des Klebstoffes beschichtet, getrocknet und in einer beheizbaren Laborpresse mit einem zweiten, unbeschichteten PVC-Streifen 30 Sekunden lang bei einer Temperatur von 50°C im Klebstoff verpresst.1 min nach der Verpressung erfolgt die Prüfung bei Normklima an einer Zugprüfmaschine. Nach Ablauf der vorgegebenen Verweilzeit wird der Prüfstreifen vom unteren Ende her zur Hälfte abgezogen und im Winkel von 180° nach oben geschlagen. Das nun freie Ende des Prüfsubstrates wird in die Zugprüfmaschine eingespannt und der Prüfstreifen wird im Winkel von 180 Grad mit einer Maschinengeschwindigkeit von 300 mm/Minute abgezogen. Nach jeder Messung wird das Prüfsubstrat erneuert. Es werden mindestens 3 Einzelmessungen durchgeführt. Die Angabe der Prüfergebnisse erfolgt in N/5 cm Breite.

### Messmethode "Kontaktverklebung"

Zwei flache, 40 mm breite Buchenholzprüfkörper werden auf einer Fläche von 20 x 40 mm mit jeweils 35-45 g/m² (fest) des Klebstoffs beschichtet und getrocknet. Nach einer Stunde werden die Klebstoffschichten 30 Sekunden lang bei 23°C unter einem Druck von 0,5 N/mm² verpresst. Anschließend wird in einer Reißmaschine bei 23°C die Scherfestigkeit der Verklebung in N ermittelt.

**Tabelle1: Messergebnisse**

| Beispiel | Scherwert Kontaktverklebung [N] | Schälwert¹⁾ [N/5 cm] | Kantenschrumpf <0,3 mm [°C] |
|---|---|---|---|
| V2 | 940 | nicht messbar | 85 |
| V1 | keine Verklebung | 34 | 90 |
| B2 | 1338 | 23 | > 95 |
| B1 | 1811 | 34 | 95 |

| | | | |
|---|---|---|---|
| ¹⁾ bei 23 °C, nach Thermoaktivierung bei 50 °C | | | |

Die Ergebnisse in Tabelle 1 zeigen, dass die erfindungsgemäßen Dispersionen B1 und B2 im Thermoaktivierverfahren vorteilhaft verwendbar sind, weil sie bei vergleichsweise niedrigen Temperaturen thermoaktiviert werden können und zugleich eine ausreichend hohe Schälfestigkeit bei Raumtemperatur (Schälwert) sowie eine hohe Wärmestandfestigkeit der Verklebung (Kantenschrumpf) erzeugen. Mit den erfindungsgemäßen Dispersionen beschichtete Materialien können zudem bei Raumtemperatur im Kontaktverfahren verklebt werden und liefern dabei hohe Klebfestigkeiten.

## Patentansprüche

1. Verwendung von wässrigen Polyurethandispersionen zur Kaschierung von Formkörpern, wobei das Polyurethan von mindestens einem amorphen Polyesterpolyol abgeleitete Einheiten und von mindestens einem Polycarbonat abgeleitete Einheiten aufweist, wobei zur Herstellung des amorphen Polyesterpolyols ein Gemisch von Carbonsäuren verwendet wird bestehend aus mindestens einer aliphatischen Dicarbonsäure mit 3 bis 10, vorzugsweise 4 bis 8 C-Atomen und mindestens einer aromatischen Dicarbonsäure im molaren Verhältnis von 0,5:1 bis 2:1.

2. Verwendung nach dem vorhergehenden Anspruch, **dadurch gekennzeichnet, dass** das amorphe Polyesterpolyol im Temperaturbereich von -30°C bis +60°C keinen Schmelzpunkt aufweist.

3. Verwendung nach einem der vorhergehenden Ansprüche, **dadurch gekennzeichnet, dass** das Polyurethan im Wesentlichen aufgebaut ist aus
a) mindestens einem amorphen Polyesterdiol mit einem Molekulargewicht über 500 bis 4000 g/mol,
b) mindestens einem Polycarbonat mit einem Molekulargewicht über 500 bis 4000 g/mol,
c) mindestens einem organischen Diisocyanat oder einem eine arithmetische mittlere NCO-Funktionalität von 1,9 bis 2,3 aufweisenden Gemisch aus organischen Isocyanatverbi ndungen,
d) optional mindestens einem zweiwertigen Alkohol eines mittleren Molekulargewichts von 62 bis 500 g/mol und
e) optional mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, und Diaminoverbindungen, welche zusätzlich mindestens eine ionische Gruppe oder mindestens eine in eine ionische Gruppe überführbare Gruppe enthalten,
f) optional weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) optional von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

4. Verwendung nach einem der vorhergehenden Ansprüche, **dadurch gekennzeichnet, dass** das Polyurethan zu mindestens 10 Gew.-% aus mindestens einem amorphen Polyesterpolyol und zu mindestens 10 Gew.-% aus mindestens einem Polycarbonat aufgebaut ist.

5. Verwendung nach einem der vorhergehenden Ansprüche, **dadurch gekennzeichnet, dass** das Polycarbonat ein Hydroxy-terminiertes Polycarbonat auf Basis von mindestens einem Alkandiol mit 2 bis 10, vorzugsweise 4 bis 8 C-Atomen, insbesondere 1,6-Hexandiol ist.

6. Verwendung nach einem der vorhergehenden Ansprüche, **dadurch gekennzeichnet, dass** das amorphe Polyesterpolyol aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen.

7. Verwendung nach dem vorhergehenden Anspruch, **dadurch gekennzeichnet, dass** der amorphe Polyesterpolyol aufgebaut ist aus Adipinsäure/Isophthalsäure im Verhältnis von vorzugsweise 0,5:1 bis 2:1 und mindestens einem Alkandiol mit 4 bis 8 C-Atomen, vorzugsweise 1,6-Hexandiol.

8. Verwendung nach einem der vorhergehenden Ansprüche, **dadurch gekennzeichnet, dass** das Polyurethan zu 2 bis 10 Gew.% aus mindestens einem zweiwertigen Alkohol eines mittleren Molekulargewichts von 62 bis 500 g/mol aufgebaut ist.

9. Verwendung nach einem der vorhergehenden Ansprüche, **dadurch gekennzeichnet, dass** das Polyurethan aufgebaut ist aus organischen Diisocyanaten, die ausgewählt sind aus Isophorondiisocyanat, Hexamethylendiisocyanat und einem Gemisch aus Isophorondiisocyanat und Hexamethylendiisocyanat.

10. Verwendung nach einem der vorhergehenden Ansprüche, **dadurch gekennzeichnet, dass** der Quotient aus der Summe aller NCO-Gruppen und der Summe aller NCO-reaktiven OH-Gruppen zwischen 0,7 und 1,5 liegt.

11. Verwendung nach einem der vorhergehenden Ansprüche, **dadurch gekennzeichnet, dass** das molare Verhältnis von Polyesterpolyol zu Polycarbonat im Bereich von 1:10 bis 10:1 liegt.

12. Verwendung nach einem der vorhergehenden Ansprüche, **dadurch gekennzeichnet, dass** das Polyurethan im Wesentlichen aufgebaut ist aus
a) 10 bis 80 Gew.% an mindestens einem amorphen Polyesterdiol mit einem Molekulargewicht über 500 bis 4000 g/mol,
b) 10 bis 80 Gew.% an mindestens einem Polycarbonat mit einem Molekulargewicht über 500 bis 4000 g/mol,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen,
d) 2 bis 10 Gew.% an mindestens einem zweiwertigen Alkohol eines mittleren Molekulargewichts von 62 bis 500 g/mol und
e) 0 bis 10 Gew.% an mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, und Diaminoverbindungen, welche zusätzlich mindestens eine ionische Gruppe oder mindestens eine in eine ionische Gruppe überführbare Gruppe enthalten,
f) 0 bis 5 Gew.% an weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) 0 bis 5 Gew.% an von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

13. Verwendung nach einem der vorhergehenden Ansprüche, **dadurch gekennzeichnet, dass** die Polyurethandispersion als Zweikomponenten-Klebstoffzusammensetzung zusammen mit mindestens einer Polyisocyanatverbindung eingesetzt wird.

14. Verwendung nach einem der vorhergehenden Ansprüche, **dadurch gekennzeichnet, dass** die Polyurethandispersion mit mindestens einer weiteren Polymerdispersion abgemischt wird, wobei die weitere Polymerdispersion ausgewählt ist aus der Gruppe bestehend aus Polyacrylatdispersionen, Polyvinylacetatdispersionen, Polyethylenvinylacetatdispersionen und deren Mischungen, wobei das Gewichtsmengenverhältnis Polyurethandispersion: Abmischdispersion vorzugsweise im Bereich von 3:1 bis 1:2, bezogen jeweils auf Feststoffgehalt, liegt.

15. Verfahren zur Herstellung von kaschierten Formkörpern, **dadurch gekennzeichnet, dass** man
a) einen Formkörper zur Verfügung stellt,
b) eine Folie zur Verfügung stellt,
c) eine wässrige Polyurethandispersion gemäß einem der vorhergehenden Ansprüche zur Verfügung stellt und
d) die wässrige Polyurethandispersion auf die Folie und/oder den Formkörper aufträgt und die Folie auf den Formkörper aufkaschiert.

16. Folienkaschierter Formkörper, erhältlich nach dem Verfahren gemäß dem vorhergehenden Anspruch.

17. Folienkaschierter Formkörper nach dem vorhergehenden Anspruch, **dadurch gekennzeichnet, dass** das Folienmaterial ausgewählt ist aus der Gruppe bestehend aus Polyvinylchlorid, das auch Weichmacher enthalten kann, und thermoplastisches Polyolefin (TPO) und Kombinationen daraus.

## Claims

1. The use of aqueous polyurethane dispersions for the lamination of moldings, where the polyurethane comprises units derived from at least one amorphous polyester polyol and comprises units derived from at least one polycarbonate, where the amorphous polyester polyol is produced by using a mixture of carboxylic acids composed of at least one aliphatic dicarboxylic acid having from 3 to 10, preferably from 4 to 8, carbon atoms and at least one aromatic dicarboxylic acid in a molar ratio of from 0.5:1 to 2:1.

2. The use according to the preceding claim, wherein the amorphous polyester polyol does not have a melting point in the temperature range -30°C to +60°C.

3. The use according to any of the preceding claims, wherein the polyurethane consists essentially of
a) at least one amorphous polyesterdiol with a molar mass of above 500 to 4000 g/mol,
b) at least one polycarbonate with a molar mass of above 500 to 4000 g/mol,
c) at least one organic diisocyanate or one mixture which is made of organic isocyanate compounds and which has an arithmetic-average NCO functionality of 1.9 to 2.3,
d) optionally at least one dihydric alcohol with an average molar mass of 62 to 500 g/mol, and
e) optionally at least one compound selected from the group consisting of mono- to trihydric alcohols which also comprise at least one ionic group or at least one group capable of conversion to an ionic group, and diamino compounds which also have at least one ionic group or at least one group capable of conversion to an ionic group,
f) optionally further polyfunctional compounds which differ from the monomers (a) to (e) and which have reactive groups which involve alcoholic hydroxy groups, primary or secondary amino groups, or isocyanate groups, and
g) optionally monofunctional compounds which differ from the monomers (a) to (f) and which have a reactive group which involves an alcoholic hydroxy group, a primary or secondary amino group, or an isocyanate group.

4. The use according to any of the preceding claims, wherein the polyurethane is composed of at least 10% by weight of at least one amorphous polyester polyol and of at least 10% by weight of at least one polycarbonate.

5. The use according to any of the preceding claims, wherein the polycarbonate is a hydroxy-terminated polycarbonate based on at least one alkanediol having 2 to 10, preferably 4 to 8, carbon atoms, in particular 1,6-hexanediol.

6. The use according to any of the preceding claims, wherein the amorphous polyester polyol is composed of a mixture of at least one aliphatic dicarboxylic acid having 3 to 10, preferably 4 to 8, carbon atoms and at least one aromatic dicarboxylic acid in a ratio of 0.5:1 to 2:1, and at least one alkanediol having 2 to 10, preferably 4 to 8, carbon atoms.

7. The use according to the preceding claim, wherein the amorphous polyester polyol is composed of adipic acid/isophthalic acid in a ratio that is preferably 0.5:1 to 2:1 and of at least one alkanediol having 4 to 8 carbon atoms, preferably 1,6-hexanediol.

8. The use according to any of the preceding claims, wherein the polyurethane is composed of 2 to 10% by weight of at least one dihydric alcohol with an average molar mass of 62 to 500 g/mol.

9. The use according to any of the preceding claims, wherein the polyurethane is composed of organic diisocyanates selected from isophorone diisocyanate, hexamethylene diisocyanate, and a mixture of isophorone diisocyanate and hexamethylene diisocyanate.

10. The use according to any of the preceding claims, wherein the quotient calculated from the entirety of all of the NCO groups and from the entirety of all of the NCO-reactive OH groups is from 0.7 to 1.5.

11. The use according to any of the preceding claims, wherein the molar ratio of polyester polyol to polycarbonate is in the range 1:10 to 10:1.

12. The use according to any of the preceding claims, wherein the polyurethane consists essentially of
a) 10 to 80% by weight of at least one amorphous polyesterdiol with a molar mass of above 500 to 4000 g/mol,
b) 10 to 80% by weight of at least one polycarbonate with a molar mass of above 500 to 4000 g/mol,
c) 5 to 30% by weight of at least one organic diisocyanate or one mixture which is made of organic isocyanate compounds and which has an arithmetic-average NCO functionality of 1.9 to 2.3,
d) 2 to 10% by weight of at least one dihydric alcohol with an average molar mass of 62 to 500 g/mol, and
e) 0 to 10% by weight of at least one compound selected from the group consisting of mono- to trihydric alcohols which also comprise at least one ionic group or at least one group capable of conversion to an ionic group, and diamino compounds which also have at least one ionic group or at least one group capable of conversion to an ionic group,
f) 0 to 5% by weight of further polyfunctional compounds which differ from the monomers (a) to (e) and which have reactive groups which involve alcoholic hydroxy groups, primary or secondary amino groups, or isocyanate groups, and
g) 0 to 5% by weight of monofunctional compounds which differ from the monomers (a) to (f) and which have a reactive group which involves an alcoholic hydroxy group, a primary or secondary amino group, or an isocyanate group.

13. The use according to any of the preceding claims, wherein the polyurethane dispersion is used in the form of two-component adhesive composition together with at least one polyisocyanate compound.

14. The use according to any of the preceding claims, wherein the polyurethane dispersion is blended with at least one further polymer dispersion, where the further polymer dispersion is one selected from the group consisting of polyacrylate dispersions, polyvinyl acetate dispersions, polyethylene-vinyl acetate dispersions, and mixtures of these, where the quantitative ratio by weight of polyurethane dispersion to blend dispersion is preferably in the range of 3:1 to 1:2, based in each case on solids content.

15. A process for the production of laminated moldings, which comprises
a) providing a molding,
b) providing a foil,
c) providing an aqueous polyurethane dispersion according to any of the preceding claims, and
d) applying the aqueous polyurethane dispersion to the foil and/or to the molding, and laminating the foil to the molding.

16. A foil-laminated molding obtainable by the process according to the preceding claim.

17. The foil-laminated molding according to the preceding claim, wherein the foil material is one selected from the group consisting of polyvinyl chloride, which can also comprise plasticizer, and thermoplastic polyolefin (TPO), and combinations thereof.

## Revendications

1. Utilisation de dispersions aqueuses de polyuréthane pour le revêtement de corps moulés, dans laquelle le polyuréthane comprend des unités dérivées d'au moins un polyester-polyol amorphe et des unités dérivées d'au moins un polycarbonate, un mélange d'acides carboxyliques constitué d'au moins un acide dicarboxylique aliphatique de 3 à 10, de préférence 4 à 8 atomes C, et d'au moins un acide dicarboxylique aromatique en un rapport molaire de 0,5:1 à 2:1 étant utilisé pour la fabrication du polyester-polyol amorphe.

2. Utilisation selon la revendication précédente, **caractérisée en ce que** le polyester-polyol amorphe ne présente pas de point de fusion dans la plage de températures allant de -30 °C à +60 °C.

3. Utilisation selon l'une quelconque des revendications précédentes, **caractérisée en ce que** le polyuréthane est essentiellement constitué par :
a) au moins un polyester-diol amorphe ayant un poids moléculaire de plus de 500 à 4 000 g/mol,
b) au moins un polycarbonate ayant un poids moléculaire de plus de 500 à 4 000 g/mol,
c) au moins un diisocyanate organique ou un mélange de composés d'isocyanates organiques présentant une fonctionnalité NCO en moyenne arithmétique de 1,9 à 2, 3,
d) éventuellement au moins un alcool bivalent ayant un poids moléculaire de 62 à 500 g/mol, et
e) éventuellement au moins un composé choisi dans le groupe constitué par les alcools mono- à trivalents, qui contiennent en outre au moins un groupe ionique ou au moins un groupe pouvant être transformé en un groupe ionique, et les composés diamino, qui contiennent en outre au moins un groupe ionique ou au moins un groupe pouvant être transformé en un groupe ionique,
f) éventuellement d'autres composés polyvalents différents des monomères (a) à (e), contenant des groupes réactifs qui sont des groupes hydroxyle alcooliques, des groupes amino primaires ou secondaires ou des groupes isocyanate, et
g) éventuellement des composés monovalents différents des monomères (a) à (f), contenant un groupe réactif qui est un groupe hydroxyle alcoolique, un groupe amino primaire ou secondaire ou un groupe isocyanate.

4. Utilisation selon l'une quelconque des revendications précédentes, **caractérisée en ce que** le polyuréthane est constitué à hauteur d'au moins 10 % en poids d'au moins un polyester-polyol amorphe et à hauteur d'au moins 10 % en poids d'au moins un polycarbonate.

5. Utilisation selon l'une quelconque des revendications précédentes, **caractérisée en ce que** le polycarbonate est un polycarbonate à terminaison hydroxy à base d'au moins un alcanediol contenant 2 à 10, de préférence 4 à 8 atomes C, notamment le 1,6-hexanediol.

6. Utilisation selon l'une quelconque des revendications précédentes, **caractérisée en ce que** le polyester-polyol amorphe est constitué d'un mélange d'au moins un acide dicarboxylique aliphatique de 3 à 10, de préférence 4 à 8 atomes C, et d'au moins un acide dicarboxylique aromatique en un rapport de 0,5:1 à 2:1, et d'au moins un alcane-diol contenant 2 à 10, de préférence 4 à 8 atomes C.

7. Utilisation selon la revendication précédente, **caractérisée en ce que** le polyester-polyol amorphe est constitué d'acide adipique/acide isophtalique en un rapport de préférence de 0,5:1 à 2:1, et d'au moins un alcane-diol contenant 4 à 8 atomes C, de préférence le 1,6-hexanediol.

8. Utilisation selon l'une quelconque des revendications précédentes, **caractérisée en ce que** le polyuréthane est constitué à hauteur de 2 à 10 % en poids d'au moins un alcool bivalent ayant un poids moléculaire moyen de 62 à 500 g/mol.

9. Utilisation selon l'une quelconque des revendications précédentes, **caractérisée en ce que** le polyuréthane est constitué de diisocyanates organiques, qui sont choisis parmi le diisocyanate d'isophorone, le diisocyanate d'hexaméthylène et un mélange de diisocyanate d'isophorone et de diisocyanate d'hexaméthylène.

10. Utilisation selon l'une quelconque des revendications précédentes, **caractérisée en ce que** le quotient de la somme de tous les groupes NCO et de la somme de tous les groupes OH réactifs avec NCO est compris entre 0,7 et 1,5.

11. Utilisation selon l'une quelconque des revendications précédentes, **caractérisée en ce que** le rapport molaire entre le polyester-polyol et le polycarbonate se situe dans la plage allant de 1:10 à 10:1.

12. Utilisation selon l'une quelconque des revendications précédentes, **caractérisée en ce que** le polyuréthane est essentiellement constitué par :
a) 10 à 80 % en poids d'au moins un polyester-diol amorphe ayant un poids moléculaire de plus de 500 à 4 000 g/mol,
b) 10 à 80 % en poids d'au moins un polycarbonate ayant un poids moléculaire de plus de 500 à 4 000 g/mol,
c) 5 à 30 % en poids d'au moins un diisocyanate organique ou d'un mélange de composés d'isocyanates organiques présentant une fonctionnalité NCO en moyenne arithmétique de 1,9 à 2,3,
d) 2 à 10 % en poids d'au moins un alcool bivalent ayant un poids moléculaire de 62 à 500 g/mol, et
e) 0 à 10 % en poids d'au moins un composé choisi dans le groupe constitué par les alcools mono- à trivalents, qui contiennent en outre au moins un groupe ionique ou au moins un groupe pouvant être transformé en un groupe ionique, et les composés diamino, qui contiennent en outre au moins un groupe ionique ou au moins un groupe pouvant être transformé en un groupe ionique,
f) 0 à 5 % en poids d'autres composés polyvalents différents des monomères (a) à (e), contenant des groupes réactifs qui sont des groupes hydroxyle alcooliques, des groupes amino primaires ou secondaires ou des groupes isocyanate, et
g) 0 à 5 % en poids de composés monovalents différents des monomères (a) à (f), contenant un groupe réactif qui est un groupe hydroxyle alcoolique, un groupe amino primaire ou secondaire ou un groupe isocyanate.

13. Utilisation selon l'une quelconque des revendications précédentes, **caractérisée en ce que** la dispersion de polyuréthane est utilisée en tant que composition adhésive à deux composants conjointement avec un composé de polyisocyanate.

14. Utilisation selon l'une quelconque des revendications précédentes, **caractérisée en ce que** la dispersion de polyuréthane est mélangée avec au moins une autre dispersion de polymère, l'autre dispersion de polymère étant choisie dans le groupe constitué par les dispersions de polyacrylate, les dispersions de polyacétate de vinyle, les dispersions de polyacétate d'éthylène-vinyle et leurs mélanges, le rapport en poids dispersion de polyuréthane:dispersion mélangée se situant de préférence dans la plage allant de 3:1 à 1:2, à chaque fois par rapport à la teneur en solides.

15. Procédé de fabrication de corps moulés revêtus, **caractérisé en ce que**
a) un corps moulé est mis à disposition,
b) un film est mis à disposition,
c) une dispersion aqueuse de polyuréthane selon l'une quelconque des revendications précédentes est mise à disposition, et
d) la dispersion aqueuse de polyuréthane est appliquée sur le film et/ou le corps moulé, et le film est revêtu sur le corps moulé.

16. Corps moulé revêtu par un film, pouvant être obtenu par le procédé selon la revendication précédente.

17. Corps moulé revêtu par un film selon la revendication précédente, **caractérisé en ce que** le matériau du film est choisi dans le groupe constitué par le polychlorure de vinyle, qui peut également contenir des plastifiants, et une polyoléfine thermoplastique (TPO) et leurs combinaisons.
